# EUROPEAN PATENT APPLICATION

(11) **EP 1 719 613 A1**
(43) Date of publication of application: **08.11.2006**
(21) Application number: 05447104.0
(22) Date of filing: 04.05.2005
(51) Int. Cl.: B32B 3/22, B32B 5/10, B32B 5/28, F41H 1/00, F41H 5/04

(54) **Needle, cut and bullet resistant composite**

(71) Applicant: Dynatex S.A., 7700 Moeskroen (BE)
(72) Inventor: De Meyer, Willy, 9031 Drongen (BE)
(74) Representative: Brants, Johan P.E.

(57) **Abstract**

The present invention relates to needle resistant fabrics and composites. In one aspect, the invention relates to an improved cut-resistant composite. In another aspect the invention relates to a needle punch resistant composite. In another aspect, the invention relates to a needle and bullet resistant composite. In still another aspect, the invention relates to a needle and cut resistant composite. In yet another aspect, the invention relates to a needle and cut and bullet resistant composite.

## Description

### Field of the invention

The present invention relates to the field of needle resistant fabrics and composites. In one aspect, the invention relates to an improved cut-resistant composite. In another aspect the invention relates to a needle punch resistant composite. In another aspect, the invention relates to a needle and cut resistant composite. In yet another aspect, the invention relates to a needle and cut and bullet resistant composite.

### Background of the invention

There are already a lot of fabrics on the market which are bullet-proof. Known are for instance the high density polyethylene fabrics and the aramid fabrics of for instance Kevlar of Dupont, Twaron or Technora of Teijin wherein several layers of fabric are provided in order to resist to a bullet with a given weight and a given speed.

Also to overcome knife attacks there are several knife-proof fabrics on the market for the majority comprising woven steel cords and also in the shape of a fabric preferably in steel wires or steel-cord, mixed or not with aramids and/or HDPE.

However, a commonly known problem with bullet-proof and knife-proof fabrics is that these fabrics are not resistant to needles and cannot prevent needle penetration and/or the penetration of fragmented bullets in needle-shape.

Another problem associated with commonly known cut-resistant fabrics that are applied, e.g. by gluing, on constructions such as tarpaulins, canvasses, tents, and the like, for reinforcement thereof, is that such fabrics can be easily peeled off from the constructions.

In view of the above, it is clear that there is a great need in the art for composites and fabrics showing an improved reinforcement. More in particular, there is a great need in the art for composites and fabrics having improved needle resistance.

It is therefore an object of the present invention to provide an improved needle-resistant composite. It is in particular an object of the present invention to provide a composite, which has needle resistance as well as cutting and bullet resistance.

### Summary of the invention

In a first aspect the invention relates to a cut resistant composite comprising a matrix, provided on at least one side with a cut resistant fabric, said fabric, comprising at least two layers and/or at least two directions of individual elements of which at least one individual element is reinforced, whereby said composite further comprises at least one coating layer interposed between said fabric and said matrix, whereby said coating layer comprises at least two layers and/or at least two directions of individual elements of which at least one individual element is reinforced.

In a second aspect the invention relates to a needle resistant composite comprising a matrix, provided on at least one side with a fabric, said fabric comprising at least one layer of insulating material which is at least partially interconnected on distinct intervals and showing seams and free spaces in between said seams, said free spaces containing strips and/or plates of a composite material and/or metal.

In a third aspect the invention relates to a needle resistant composite as defined herein which further comprises a bullet resistant composite connected to the fabric of the needle resistant composite, said bullet resistant composite comprising one or more layers of a bullet-resistant fabric.

In a fourth aspect, the invention relates to a needle and bullet resistant composite as defined herein which further comprises at least one cut resistant fabric connected to the fabric of the needle resistant composite and/or to said bullet resistance fabric, said cut resistant fabric comprising
- at least two layers and/or at least two directions of individual elements of which at least one individual element is reinforced, and
- at least two layers of an insulating material whereby at least one layer is provided on one side of said fabric, and at least one other layer is provided on the other side of said fabric.

In a particularly preferred, said cut resistant composite is provided with at least one additional insulating layer provided with at least two individual layers of reinforcement elements. Said reinforcement elements are preferably embedded in said insulation layer.

The needle resistant composite and the bullet resistant composite and the cut resistant composite may be connected to one another by any possible technique, including but not limited to gluing, stitching, sewing, welding, suing, etc...

The needle, cut and bullet resistant composites or any combinations thereof according to the invention are particularly useful as anti-vandalism composites and for use in protective clothing, for instance for policemen, security officers, etc.... Those skilled in the art will immediately recognize the many possibilities for end uses of the present invention from the detailed description and accompanying drawings provided below.

### Description of the figures

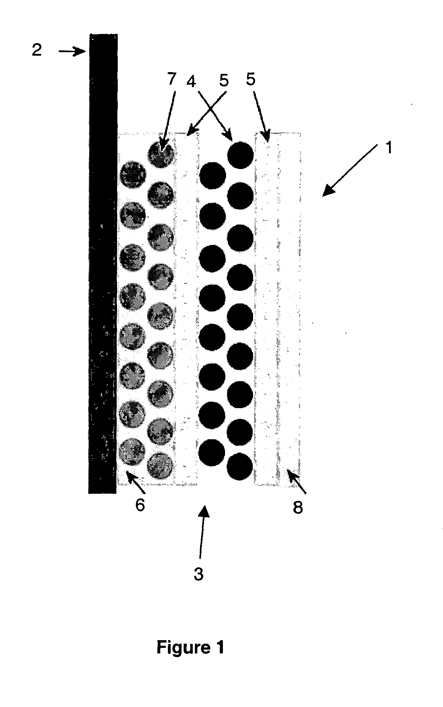

Figure 1 represents an embodiment of an improved cut-resistant composite according to the invention.

### Detailed description of the invention

In a first aspect, the invention relates to a composite having improved cutting resistance. In a second aspect the invention relates to a needle punch resistant composite. In another aspect, the invention relates to a needle and bullet resistant composite. In still another aspect, the invention relates to a needle and cut resistant composite. In yet another aspect, the invention relates to a needle and cut and bullet resistant composite. The present invention may thus provides a composite having in the first place improved needle punch resistance, in the second place it helps against knife penetrations and in the third place it also helps against bullet penetrations and the penetration of bullet's split-offs such as shrapnel's and the like.

In a preferred way, the fabric and/or composites according to the invention contain reinforcement elements which may be metal fibers or yarns or cables in any possible shape, round, oval, rectangular etc.

### Improved cut-resistant composite

In one embodiment, the present invention provides a cut-resistant composite comprising a matrix, provided on at least one side with a cut resistant fabric, said fabric, comprising at least two layers and/or at least two directions of individual elements of which at least one individual element is reinforced, whereby said composite further comprises at least one coating layer interposed between said fabric and said matrix, whereby said coating layer comprises at least two layers and/or at least two directions of individual elements of which at least one individual element is reinforced.

In another embodiment, the invention provides a cut resistant composite comprising:
- a matrix, provided on at least one side with a cut resistant fabric, said fabric, comprising at least two layers and/or at least two directions of individual elements of which at least one individual element is reinforced, and
- at least one insulating layer interposed between said matrix and said fabric, whereby said composite further comprises at least one coating layer interposed between said insulating layer and said matrix, whereby said coating layer comprises at least two layers and/or at least two directions of individual elements of which at least one individual element is reinforced.

The present invention provides a cut-resistant composite that comprises a matrix, provided on at least one side with a cut resistant fabric, and at least one insulating layer and/or coating layer interposed between said matrix and said fabric. The composite is in particular improved vis-a-vis cut-resistant composites known in the art, in that the insulating layer or coating layer which is interposed between said matrix and said fabric is provided with at least two individual layers of reinforcement elements. Preferably in each of said individual layers all reinforcement elements are provided in only one, same direction, said individual layers being interconnected or deposited onto each other. Said reinforcement elements are preferably embedded in said insulation layer.

In an example, the insulating layer or coating layer may consist of two, three, four or even more individual layers of reinforcement elements. In particular, in each of these individual layers all reinforcement elements in the layer have only one, same direction. Such individual layers of "single-directed" reinforcement elements can be superimposed onto each other. Alternatively, another layer, e.g. a non woven or a foam layer, can additionally be provided between two individual layers of single-directed reinforcement elements. The different individual layers of "single-directed" reinforcement elements can be arranged under a certain angle with respect to each other. Said angle preferably differs from 90° and is preferably comprised between 1 and 89 degrees, and for example 10, 20, 30, 40, 50, 60, 70 or 80 degrees.

By providing an insulating layer or coating layer which comprises reinforcement elements in between the fabric and the matrix, the present invention provides a composite wherein the fabric is either only partly or even entirely insulated from the matrix. The reinforcement elements which are embedded or fixed in the insulating layer or coating layer provide additional strength and cutting resistance, and greatly reduce the ease of peeling or tearing off the fabric from the matrix.

**Figure 1** illustrates an embodiment of a composite 1 according to the invention, showing a matrix 2, e.g. a tarpaulin, provided on at least one side of a cut resistant fabric 3, having two layers and/or at least two directions of individual elements 4 of which at least one individual element is reinforced, and preferably is a galvanized steel wire. The composite is further provided with two layers of an non woven material 5 whereby one layer is provided on one side of said fabric 4, and at least one other layer is provided on the other side of said fabric 4. The composite further comprises an additional coating layer 6 interposed between said non woven layer 5 and said matrix 2. The latter coating layer, preferably made of PVC, comprises two layers and/or at least two directions of individual elements 7 of which at least one individual element is reinforced, and preferably is a galvanized steel wire. The composite also comprises an additional coating layer 8, provided on the outside of the fabric. More in particular, the present composite is engineered as an anti-vandalism and anti-theft solution. Moreover, the present composite offers an enhanced protection against the laceration of a tarpaulin, thanks to layers of steel wires in the PVC coating which are welded in between the tarpaulin 1 and the fabric 3. These wires block the progression of a knife blade as soon as it penetrates into the fabric.

In a preferred embodiment, the present composites are multi-layered composites. Preferably layers of galvanised steel wires are placed under different angles. The present composites have a high cut-resistant property while offering a great flexibility and light weight.

In one example the present composite may have the characteristics as represented in table 1.

**Table 1: Characteristics of an embodiment of a cut-resistant composite according to the invention**

| | |
|---|---|
| Reinforcement | 4 layers (0°, +60°, 90°, -60°) of galvanised steel wires |
| Weight | 1000 gr/m² (± 5%) |
| Width | 125 cm (± 2 cm) or 250 cm (± 4 cm) |
| Packaging | rolls of 135 lm (others on demand) 6 rolls of 135 lm per pallet |
| Utilisation | hot air welding on a PVC fabric finishing with PVC webbing over the borders |
| T° range of use | -30 °C up to 70 °C |
| Repair | on the inside and/or outside |

Table 2 illustrates the characteristics of an embodiment of a cut-resistant composite according to the invention including an alarm system.

**Table 2: Characteristics of an embodiment of a cut-resistant composite with alarm according to the invention**

| | |
|---|---|
| Reinforcement | 4 layers (0°, +45°, 90°, -45°) of coated steel wires |
| Weight | ± 1150 gr/m² |
| Width | adaptable in accordance with needs |
| Packaging | adaptable in accordance with needs |
| Utilisation | infra red or hot air welding on a to reinforce plastic material or use as such |
| T° range of use | -50 °C up to ± 250 °C (depending on the type of thermoplastic used) |
| Alarm system | at least one layer of conductive foil (preferably insulated) e.g. aluminium foil of 8 microns insulated by a polyester foil of 12 microns or a PA foil of 12 microns (*) |

| | |
|---|---|
| (*) the indicated layer(s) serve as conductor(s), one may be connected or not to at least one metal reinforcement layers. | |

Table 3 illustrates the characteristics of another embodiment of a cut-resistant composite according to the invention including an alarm system.

**Table 3: Characteristics of an embodiment of a cut-resistant composite with alarm according to the invention**

| | |
|---|---|
| Reinforcement | 3 layers (+45°, 90°, -45°) of coated steel wires |
| Weight | ± 1120 gr/m² |
| Width | adaptable in accordance with needs |
| Packaging | adaptable in accordance with needs |
| Utilisation | use as such as protection material with alarm system |
| T° range of use | -45°C up to ± 110 °C (with PVC material combined) |
| | -45°C up to ± 250 °C (with temperature resistant coating) |
| Alarm system | can be made with double circuit (**) |

| | |
|---|---|
| (**) An example includes: - a thermoplastic insulation layer (e.g. PVC or PETP) - a layer of aluminium foil of e.g. 10 microns - load "A" - an insulation layer PETP of 12 microns - a layer of aluminium foil of e.g. 10 microns - load "B" | |

This can be doubled in order to obtain a maximum of security of the alarm system. The alarm with the aluminium foil or other conductive foils can stand on its own or not as alarm system. It can thus be used without the reinforcement.

Table 4 illustrates the characteristics of yet another embodiment of a cut-resistant composite according to the invention including an alarm system.

**Table 4: Characteristics of an embodiment of a cut-resistant composite with alarm according to the invention**

| | |
|---|---|
| Reinforcement | 4 layers (0°, +60°, 90°, -60°) of steel wires or other metal wires |
| Weight | ± 1150 gr/m² |
| Width | adaptable in accordance with needs |
| Packaging | adaptable in accordance with needs |
| Utilisation | standing as product on its own or to be attached by hot-air welding, infra-red welding or gluing to an existing to be protected medium e.g. tarpaulin, fence, cover, door or gate, etc... |
| T° range of use | -80 °C up to ± 300 °C (depending on the type of matrix used) |
| Alarm system | two layers (at least one) attached to electrical circuit with load "A" and |
| | two layers (at least one) attached to electrical circuit with load "B" |

Another way to obtain an improved cut-resistant protection is to have a fabric which is flexible in the longitudinal direction but in which a weft and/or bias anti-vandalism, preferably less flexible, material can be added during the welding, gluing or other connection method. When only longitudinal flexibility is needed the weft can be rigid and will in this way not interfere with the longitudinal flexibility.

An example of this is a woven or knitted fabric consisting of e.g. for the woven fabric of a 2 by 2 weave (panama weave) of an 1100 dtex polyester with an average of 9 ends per cm. Every for instance 18^{th} or 19^{th} end of polyester yarn can be replaced by a steel wire of for instance 6X20 mm or of ± 0.45mm diameter. The same can be done in weft but if this is a rod of for instance 0.45 mm a special weaving or knitting weft entrance will be required where the weft is shot into the required gap or space.

In order to overcome this special weft 'shooting' this weft or bias can also be introduced during welding or gluing. For instance, reinforcement elements, such as e.g. metal rods, may be introduced in a fabric as stiff weft and/or bias elements using a suitable device. These metal rods may be fixed to the composite, e.g. a tarpaulin made of PVC, by means of infra red or hot air welding, or by gluing, or any other fixation technique.

The width (i.e. the length of the reinforcement rods or wires) of the cut-proof reinforcement could be as wide as the tarpaulin but could also be smaller; e.g. a reinforcement height of 1.30 m of the total tarpaulin height, the width of the PVC roll or reinforced PVC roll could also be adapted.

### Needle-resistant composite

In another embodiment, the invention relates to a needle resistant composite comprising a matrix that is provided on at least one side with a fabric. This fabric preferably comprises at least one layer of insulating or protection material which is at least partially interconnected on distinct intervals showing seams and free spaces in between said seams, said free spaces containing strips and/or plates of a composite material and/or metal. Preferably, the fabric is a so-called "gauntlet fabric".

In another preferred embodiment, the gauntlet fabric is preferably based on HDPE and/or aramid yarns.

The material could also be made as a flexible composite plate made of e.g. glass reinforcement and epoxy matrix or of e.g. aramid and polyester matrix, or e.g. carbon fiber reinforcement and polyamide matrix, or any possible combination of known reinforcement materials, yarns, fibers and/or fabrics and any known matrixes.

One layer of material may be folded and interconnected by means of knitting, gluing, welding, etc... or any other technique, in order to form seams, which are spaced apart from each other.

Alternatively, when having more than one layer of insulating or protection material, the layers of material may be interconnected to one another on distinct intervals by means of knitting, gluing, welding, etc... or any other technique, in order to form seams, which are spaced apart from each other. In between said seams, the fabric shows free spaces in between the layers of the insulating/protection material. These free spaces may be filled or packed with strips and/or plates of metal and/or a composite material.

Preferably, the gauntlet fabric is provided with seams, which are spaced apart from each other from between 2 mm and 800 mm and preferably from between 10 mm and 100 mm.

As already mentioned, this could also be a full width flexible layer of composite or metal material instead of strips or small plates of composite and/or metal.

In another preferred embodiment, present invention provides a composite whereby the free spaces of the fabric are filled up with material selected from the group comprising but not limited to metal and/or composite materials. The composite material used in said gauntlet fabric is preferably selected from the group comprising a carbon fibers or yarns, glass fibers or yarns, polyester, natural fibers or yarns, epoxy fibers or yarns, metal coated yarns, ...., or any mixtures thereof. In general, it is to be understood that a combination of all known fibers, yarns, and fabrics of natural, artificial, synthetic and/or mineral fibers and all known matrices such as epoxy, polyester, polyamide, PVC, PVDF, PETP, PP, PE, etc..; are suitable.

In another preferred embodiment said strips or plates of a metal and/or a composite material used to fill up the free spaces in a fabric according to the invention have a thickness comprised between 0.15 mm and 8 mm, and preferably between 0.3 mm and 0.8 mm.

Preferably, said fabric or composite contains strips or smaller plates of a composite material and/or metal which do not have a rigid connection, such that the fabric or composite remains flexible in at least one direction.

In another embodiment, the strips and/or plates of metal and/or composite material are put into an overlapping position without rigid connection.

The insulating material preferably comprises a foil or a non-woven. The insulating layer is preferably made of material selected from the group comprising silicone, a metal foil, damped or sputtered metal foil (e.g. aluminum), rubber, a polymer selected from the group comprising, PVC, polyester, polypropylene, polyamide, polyethylene, ethylene/butene copolymers (PEB), poly ethylene terephtalate (PET), polybutyl teraphtalate (PBT), polyvinyldifloride (PVDF), poly urethane (PU), chlorinated PVC or other polymers or mixtures thereof.

Non-wovens can be provided in all possible materials including but not limited to PETP, PBT, PA, PP, PE, PU, cellulose and any mixtures thereof. Non-wovens will preferably have a weight between 20-150 g/m², and preferably between 35 and 100 g/m².

Insulation can also be done with a foil, in all possible materials including but not limited to PETP, PBT, PA, PP, PE, PU, cellulose, cellophane, silicone, rubber sheets and any mixtures thereof. Insulation can also be obtained by a combination of a foil and a non-woven, such as but not limited to those described above.

In one embodiment, the fabric consists of a foil or a multitude of smaller foils made of metal and/or a composite material. Preferably these foil(s) have been packed in between two layers of a non-woven material, or fabrics or mixtures thereof.

In order to increase the flexibility, the surface of the insulating layer or foil can be treated at least on one side with a metal deposit e.g. chrome or other metals or e.g. a composite material being glass, natural fibers or folium, carbon fibers, polyester or epoxy but not limited to these materials.

In addition, in order to improve the impact resistance the surface of the insulating layer or foil can be further provided with foils, yarns, fibres, non-wovens or all kind of mixtures of them.

### Needle- and bullet-resistant composite

In another embodiment, the invention relates to a needle resistant composite, as defined herein, which further comprises a bullet resistant composite. Said bullet resistant composite preferably comprises one or more layers of a bullet-resistant fabric. Bullet proof fabrics are well known in the art and will not be described into detail herein.

The needle resistant composite and the bullet resistant composite may be connected to one another by any possible technique, including but not limited to gluing, stitching, sewing, welding, suing, etc...

The present composite is in particular highly resistant to needles, bullets and their split-offs such as shrapnel.

### Needle-, bullet-, and cut-resistant composite

In another embodiment, the invention relates to a composite as defined herein which further comprise at least one cut resistant composite connected to said needle resistant composite and/or to said bullet resistance composite, said cut resistant composite comprising
- at least two layers and/or at least two directions of individual elements of which at least one individual element is reinforced, and
- at least two layers of an insulating material whereby at least one layer is provided on one side of said fabric, and at least one other layer is provided on the other side of said fabric.

In a preferred embodiment, said cut resistant composite is the composite as defined herein, showing an additional insulating layer provided with at least two individual layers of reinforcement elements. Preferably in each of said individual layers all reinforcement elements are provided in only one, same direction, said individual layers being interconnected or deposited onto each other. Said reinforcement elements are preferably embedded in said insulation layer.

The needle resistant composite and the bullet resistant composite and the cut resistant composite may be connected to one another by any possible technique, including but not limited to gluing, stitching, sewing, welding, suing, etc...

The fabric used to be attached to or to contain the needle resistant composite preferably is of the same material as the bullet proof fabric and/or of the same material as the cut proof fabric, such that the weight of the total composite does not exceed too much and remains feasible and practical.

In another embodiment, the invention relates to a composite wherein the insulating material, the coating material and/or the matrix are made of material selected from the group comprising silicone, a metal foil, damped or sputtered metal foil, rubber, a polymer selected from the group comprising PVC, polyester, polypropylene, polyamide, polyethylene, ethylene/butene copolymers (PEB), poly ethylene terephtalate (PET), polybutyl teraphtalate (PBT), polyvinyldifloride (PVDF), poly urethane (PU), chlorinated PVC (PVCC), other polymers or mixtures thereof.

Different types of fabrics may be applied in the composites according to the invention. These fabrics might contain a warp and/or a weft. The difference between "multi-laid" fabric directions and "multi-axial" fabric directions is only in the fact that the individual elements with multi-axial directions are woven, stitched or knitted together lengthwise while for a multi-laid fabric they are kept together by chemical or mechanical means, such as fusion means or a combination thereof.

The term "bias" implies a direction diagonally across a piece of fabric at preferably 45 degrees to the warp and fill. In the present invention the degrees to the warp and fill may differ from 45, in a range of from 1 to 89 degrees, for example 10, 20, 30, 40, 50, 60, 70 or 80 degrees.

"Non-woven" implies material obtained by assembling fibers with other chemical, mechanical, thermal or physical processes than weaving or knitting or stitching, sewing or braiding.

"Knitting means" implies a method for forming a fabric or textile surface produced by interlacing stitches (loops).

The "warp" comprises different warp elements, laying in a same direction, the so-called warp direction. The "weft" comprises different weft elements, laying in a same direction, the so-called weft direction. Each warp and weft element follows a certain path through the fabric, being respectively a warp path or a weft path. According to the invention, at least one warp element or one weft element, or both, comprise two or more elongated steel elements, which are in contact relationship with each other.

According to the invention an "individual element" implies a warp element, preferably a yarn. A warp element is to be understood as one or more individual elements such as e.g. yarns, filaments, bundles of fibers, wires or cords, which follow the same path through the fabric in warp direction. Preferably, but not necessarily, all individual elements of a warp element cross the weft elements of the fabric in an identical way. Weft element is to be understood as one or more individual elements such as e.g. yarns, filaments, bundles of fibers, wires or cords, which follow the same path through the fabric in weft direction. Preferably, but not necessarily, all individual elements of a weft element cross the warp elements of the fabric in an identical way.

In an embodiment, the fabric comprises at least two layers and/or at least two directions of individual elements, which might be laid upon each woven, stitched interlink.

Preferably, in an embodiment the fabric comprises at least two layers and/or two directions of individual elements of which at least one individual element is a reinforced element comprising a reinforced fiber.

The invention further relates to a composite wherein the reinforcement elements in the fabric may be interconnected. It is important to note that in such type of connection the connection force between interconnected reinforcement elements, is preferably lower than the force imposed by a cutting element on the reinforcement elements, when said cutting element is forced through the fabric.

The reinforcement elements in the fabric are preferably not interwoven but have only an indirect connection created by chemicals, plastics, rubbers or by connection elements which are weaker than the reinforced element. Preferably, the insulating layer allows the penetration of stitching and/or knitting and/or tufting needles or combinations thereof so that the reinforcement elements can be connected, e.g. by stitching, knitting, etc.. to each other. The reinforcement elements can also be interconnected by means of binding techniques including but not limited to bonding, gluing, or vulcanization or any mixtures thereof.

In a particularly preferred embodiment, the connection, i.e. stitching, gluing, bonding, vulcanization or other type of connection, as those mentioned above, is weaker than the reinforced element. The connection force between interconnected reinforcement elements, being an adhesive force, a binding strength, an intermingling strength or other force, is preferably lower than the force applied by a cutter, knife or other cutting element on the reinforcement elements so that this connection breaks before one reinforcement end is being cut through. In an example, the reinforcement elements are stitched, tufted or knitted. The strength of the connection created by these stitching, tufting or knitting yarns, acting as binders, is preferably lower than the force of a knife or cutting element on the reinforcement elements, so that this connection will break before the reinforcement elements will be cut through, thereby releasing the reinforcement elements from their fixed place in the fabric.

The above-described type of connection thus enables the reinforcement yarns or elements to act as a "group" or as a "set" of elements, e.g. yarns and not as individual elements, which improves cutting resistance, as explained above.

In a preferred embodiment, the reinforcement elements have a modulus of at least 500N/mm², and preferably a modulus of at least 2000N/mm².

In another embodiment, the invention relates to a composite wherein the individual elements in the fabric consist of single ends. The term "single ends" refers to the fact that the individual elements of the fabric, being yarns, fibers, etc... are not twisted or cabled, but consist of single yarns, fibers, etc.... The fabric in the composite according to the invention thus essentially consists of a set of single individual elements. The advantages of using single yarns or single ends versus twisted or folded and cabled yarns is that single ends have a lower gauge and weight, that they are more flexible and lighter, and that they provide lower costs/kg and lower even more lower costs/surface units.

In another embodiment, the individual elements of the fabric, being yarns, fibers, etc... may be twisted or cabled.

The reinforcement elements used in a composite according to the invention may include but are not limited to of metal yarns, metal cables, steel yarns, steel cables, metal alloys yarns, carbon fibers, epoxy fibers, glass fibers, basalt fibers, aramide yarns, HDPE yarns and/or any combinations hereof. In general all natural, artificial, synthetic and mineral fibers and/or any combinations thereof are suitable.

In a preferred embodiment, the reinforcement elements are coated with metal such as vanadium, chromium, titanium or the like, preferably having a hardness of 60 Rockwell B or more. Mixtures such as Nichrome for example preferably having a hardness of more than 70 Rockwell B are also suitable.

In yet another embodiment, the reinforcement elements are coated or dipped with a plastic material and/or resin.

In another preferred embodiment, the reinforcement elements have a diameter comprised between 0.1mm and 30mm, and preferably between 0.15mm and 8cm.

In yet another embodiment, the reinforced fibers in said cut-resistant fabric are provided with joints or weakening points for enabling folding of the fabric. For certain application, flexible fabrics are required. This is for instance the case when textiles of the curtain type or the roll-up type, e.g. canvasses or tarpaulins, are to be rolled up in horizontal or vertical direction respectively to open the textiles. Textiles of this type require flexibility vertically. In order to enable the fabric according to the present invention to be easily rolled up or aside, the canvas comprises a fabric having reinforced fibers, which are provided with joints or weakening points for enabling the folding of the fabric.

Depending on the required flexibility of the composite and/or the fabric comprised in the composition, the angle of the reinforcement elements can be chosen. In a preferred embodiment the angle between the individual elements differs from 90°. In order to be flexible enough, the connection angle of the different fibers or elements in the fabric is preferably adapted such that the fabric is stiffer in width direction than in length direction. Therefore, the yarns in the fabric will preferably be arranged under a certain angle with respect to each other. Said angle preferably differs from 90° and is preferably comprised between 1 and 89 degrees, and for example 10, 20, 30, 40, 50, 60, 70 or 80 degrees. As a consequence thereof, it will be impossible for cutting elements to cut through the yarn ends under an angle of 90°. This improves stiffness of the fabric and thus also cutting resistance.

In a preferred embodiment, the invention relates to a composite, wherein the fabric contains at least one direction and/or layer of individual elements which differs to another direction and/or layer of individual elements in an angle of 90°.
In another preferred embodiment, the invention relates to a composite, wherein the fabric contains at least one direction and/or layer of individual elements which differs to another direction and/or layer of individual elements in an angle other than 90°.

In another preferred embodiment, the composite according to the invention may be provided on at least one side with an adhesive layer. Said adhesive layer is preferably self-adhesive, optionally with a releasing back sheet. The presence of a self-adhesive tape enables the composite to be applied as a tape form, or in a given width. An advantage of this type of composite is that it may be easily used, e.g. in tape form, to replace damaged parts of composites such as canvasses, tarpaulins, seats, chairs, cloths, etc..

### Construction

The composites according to any of the embodiments of the present invention are particularly useful to be used as an anti-vandalism composite.

The composites according to any of the embodiments of the present invention are also very suitable for being applied in protective clothing, for instance to be used by police men, security officers, etc....

In another embodiment the invention relates to a construction comprising one or more composites according to the invention.

The construction according to the invention may be a tarpaulin; a cover; a canvas; a "convertible" for cars or other transport vehicle; clothing material; a luggage or a parcel or another packing material; an upholstery composite reinforced in the form of seats chairs; a flexible in preference but also non-flexible door; a shelter and/or tent; a temporary wall or fence as used for exhibition rooms; a tape or zipper or other fastening means, preferably self-adhesive tape; a rope and the like, curtains and roofs for trucks, semi-trailers, railway carriages, sheeting for bulk tipping vehicles, tent and structure walls, curtains for store or factory partitioning, flexible doors, etc...

## Claims

1. A cut resistant composite comprising a matrix, provided on at least one side with a cut resistant fabric, said fabric, comprising at least two layers and/or at least two directions of individual elements of which at least one individual element is reinforced, whereby said composite further comprises at least one coating layer interposed between said fabric and said matrix, whereby said coating layer comprises at least two layers and/or at least two directions of individual elements of which at least one individual element is reinforced.

2. Composite according to claim 1, wherein said reinforcement elements are embedded in said coating layer.

3. A needle resistant composite comprising a matrix, provided on at least one side with a fabric, said fabric comprising at least one layer of insulating material which is at least partially interconnected on distinct intervals and showing seams and free spaces in between said seams, said free spaces containing strips and/or plates of a composite material and/or metal.

4. Composite according to claim 3, wherein said seams are spaced apart from each other from between 2mm to 800 mm.

5. Composite according to claim 3 or 4, wherein said composite material is selected from the group comprising carbon fibers or yarns, glass fibers or yarns, polyester fibers or yarns, natural fibers or yarns, epoxy fibers or yarns, metal coated yarns, or any mixtures thereof.

6. Composite according to claim 3 to 5, wherein said strips or plates have a thickness comprised between 0.15mm and 8mm, and preferably between 0.3mm and 0.8mm.

7. Composite according to any of claims 3 to 6, further comprising a bullet resistant composite connected to said fabric, said bullet resistant composite comprising one or more layers of a bullet-resistant fabric.

8. Composite according to any of claims 3 to 7, further comprising at least one cut resistant fabric connected to said fabric and/or to said bullet resistance fabric, said cut resistant fabric comprising
- at least two layers and/or at least two directions of individual elements of which at least one individual element is reinforced, and
- at least two layers of an insulating material whereby at least one layer is provided on one side of said fabric, and at least one other layer is provided on the other side of said fabric.

9. Composite according to any of claims 3 to 7, further comprising at least one cut resistant composite as defined in claims 1-2.

10. Composite according to any of claims 1 to 9, wherein the insulating material, the coating material and/or the matrix are made of material selected from the group comprising silicone, a metal foil, damped or sputtered metal foil, rubber, a polymer selected from the group comprising PVC, polyester, polypropylene, polyamide, polyethylene, ethylene/butene copolymers (PEB), poly ethylene terephtalate (PET), polybutyl teraphtalate (PBT), polyvinyldifloride (PVDF), poly urethane (PU), chlorinated PVC (PVCC), other polymers or mixtures thereof.

11. Composite according to any of claims 1 to 10, wherein the reinforcement elements consist of metal yarns, metal cables, steel yarns, steel cables, metal alloys yarns, carbon fibers, epoxy fibers, glass fibers, basalt fibers, aramid yarns, HDPE yarns, and/or any combinations hereof.

12. Composite according to any of claims 1 to 11, wherein the reinforcement elements are coated with metal such as vanadium, chromium, titanium or the like.

13. Composite according to any of claims 1 to 12, wherein the reinforcement elements have a diameter comprised between 0.1 mm and 30mm, and preferably between 0.15mm and 8mm.

14. Composite according to any of claims 1 to 13, wherein the reinforcement elements have a modulus of at least 500N/mm², and preferably a modulus of at least 2000N/mm².

15. Composite according to any of claims 1 to 14, wherein the reinforced elements are provided with joints or weakening points for enabling folding of the composite.

16. Composite according to any of claims 1 to 15, wherein the fabric contains at least one direction and/or layer of individual elements which differs to another direction and/or layer of individual elements in an angle of 90°.

17. Composite according to any of claims 1 to 15, wherein the fabric contains at least one direction and/or layer of individual elements which differs to another direction and/or layer of individual elements in an angle other than 90°.

18. Construction comprising a composite according to any of claims 1 to 17.

19. Construction according to claim 18, wherein said construction is a tarpaulin; a cover; a canvas; a "convertible" for cars or other transport vehicle; clothing material; a luggage or a parcel or another packing material; an upholstery composite reinforced in the form of seats chairs; a flexible in preference but also non-flexible door; a shelter and/or tent; a temporary wall or fence as used for exhibition rooms; a tape or zipper or other fastening means, preferably self-adhesive tape; a rope and the like.
